# EUROPEAN PATENT APPLICATION

(11) **EP 3 693 343 A1**
(43) Date of publication of application: **12.08.2020**
(21) Application number: 18865022.0
(22) Date of filing: 10.08.2018
(51) Int. Cl.: C02F 1/44, B01D 65/02, B01D 63/10

(54) **METHOD FOR TREATING BRACKISH WATER OR SEAWATER BY REVERSE OSMOSIS**

(30) Priority: 06.10.2017 ES 201731181
(71) Applicant: Bergaz Moro, María Teresa, 35004 Las Palmas de Gran Canaria (Las Palmas) (ES)
(72) Inventor: Bergaz Moro, María Teresa, 35004 Las Palmas de Gran Canaria (Las Palmas) (ES)
(74) Representative: Ungria López, Javier
(86) International application number: PCT/ES2018/070557
(87) International publication number: WO 2019/068943

(57) **Abstract**

The invention relates to a method for treating brackish water or seawater that comprises subjecting the stream to a filtering step, obtaining a permeate stream and a brine stream that is sent to an additional filtering step, obtaining a second permeate stream and a second brine stream, where the pressure is continuously monitored so that when signs of soiling of the first membrane are observed, the operation is halted, and it then undergoes a cleaning step during which the supply of the stream undergoes a first filtering step through a reverse osmosis membrane operating in parallel with respect to the first reverse osmosis membrane, and wherein the process is repeated continuously in alternation. The invention also relates to the system used to carry out said method.

## Description

### Technical Field

The present invention pertains to the technical field of the chemical industry and, more particularly, relates to an improved method for treating brackish water or seawater by reverse osmosis, as well as to the installation used to carry out said method.

### Background

The main operating problem confronted by seawater and brackish water treatment plants by reverse osmosis technology today is the biofouling of reverse osmosis membranes, which causes a loss in efficiency in the installations as higher energy consumption is required during the operation due to said biofouling. This biofouling constitutes one of the biggest operating problems in certain geographical areas such as the Middle East, the Mediterranean Sea, the Indian Ocean and the China Sea, where there are frequent episodes of red tide and algae bloom caused by high concentrations of natural organic material (NOM) dissolved in the feed water to seawater desalination plants. This is also a type of biofouling that usually occurs in the industrial sector, such as, for example, in paper mills and purified water tertiary treatment plants.

One of the main characteristics of biofouling is that it essentially occurs in the reverse osmosis membranes located in the first positions of the pressure pipes in which they are installed, which hinders the passage of water to the following membranes connected in series thereafter. This causes a reduced production capacity of said membranes, making it necessary to increase the operating pressure to achieve the passage of water to the last membranes placed inside the pressure pipes.

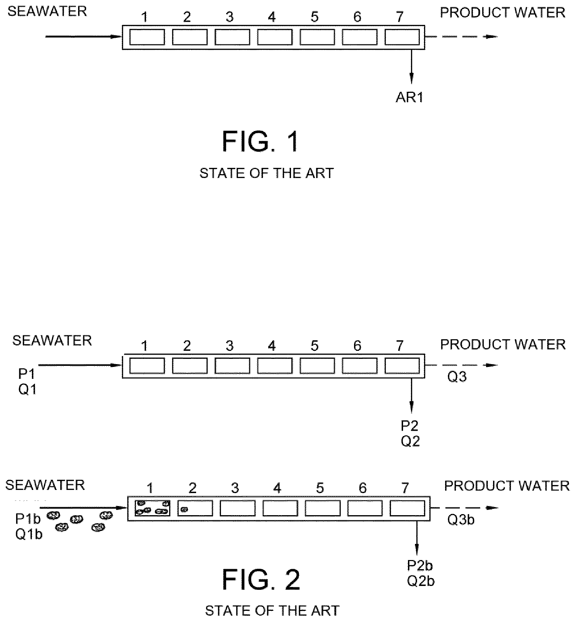

The basic diagram of a reverse osmosis membrane installation is shown in Figure 1. This figure shows 7 reverse osmosis membranes connected in series inside a pressure pipe. The usual number of membranes in the pressure pipes is 6 or 7. Reference numbers 1 to 7 refer to each of the membranes in the installation, with (1) being the first membrane, (2) the second membrane, and so on. AR1 is the stream corresponding to backwater.

The problems associated with biofouling in seawater and brackish water plants are reflected in the graph shown in Figure 2, where it can be observed that the natural organic material is preferably deposited in the first membranes (positions 1 and 2), impeding the passage of water to the following membranes (positions 3, 4, 5, 6 and 7). This causes a reduced production capacity and affects the energy consumption of the installation. This is the case without even mentioning the problems generated in the reverse osmosis plants due to the forced production shutdowns for the purpose of cleaning the membranes to recover production. It should be pointed out that the increase in salinity of the feed water to the membranes allows reducing the biofouling problem in membranes connected in series due to the osmotic shock generated as a result of said increase of salinity, which makes it impossible for biofouling to develop under said conditions. Therefore, as the water goes through the membranes, the brine content increases, reducing the impact of biofouling. For this reason, the last membranes are barely contaminated.

The main problems resulting from this type of biofouling are summarised in Table 1. The streams (Q) and pressures (P) correspond to the streams shown in Figure 2, where they are:
- P1: The pressure of the seawater or brackish water stream supplied to the system;
- Q1: The volume of flow of the seawater or brackish water stream supplied to the system;
- P2: The pressure of the backwater stream (corresponding to the brine stream);
- Q2: The volume of flow of the backwater stream (corresponding to the brine stream);
- Q3: The volume of flow of the water stream corresponding to the final product.

In particular, the diagram in the top part of Figure 2 corresponds to the installation without a biofouling problem, with 7 membranes correlatively numbered from 1 to 7, whereas the diagram in the bottom part of Figure 2 is that of a plant affected by said problem (pressures and volumes of flow are identified in the same manner as described above for the case of the installation without biofouling problems, with the addition of subscript "b" for differentiating same):

**Table 1. Main problems resulting from biofouling**

| **Problem** | **Observations** | **Consequences** |
|---|---|---|
| P1 < P1b | The feed pressure to the membranes is greater when biofouling occurs due to the clogging generated in the first membranes. | Higher energy consumption and need to replace membranes. |
| P1-P2 < P1b-P2b | The pressure drop due to the passage of water through the membranes is greater when biofouling occurs due to the clogging generated in the first membranes. | Higher energy consumption and membranes cleaned more often. Increase in cost of chemical products and loss in production due to cleaning the membranes. |
| Q3/Q1 > Q3b/Q1b | Lower recovery when biofouling occurs. | Lower production |
| Q3 > Q3b | Production is lower in plants that experience biofouling because the clogging of the first membranes reduces efficiency thereof. | Lower production |

Explained below in greater detail are the problems summarised in Table 1, associated with biofouling in seawater and brackish water plants:

### a) Higher operating pressure and, consequently, higher energy consumption.

The origin of the present invention is the real design of a reverse osmosis seawater plant in the Middle East. For the design thereof, a series of projections were carried out for a production per frame of 1 MLD (1000 m³/day). The differences observed between its design and the real operating results were the basis for justifying the present invention because said plant in question experienced a biofouling problem due to red tides, algae bloom and natural organic material present in the seawater (NOM), which is extremely common in seawater surrounding Middle Eastern countries and other geographical areas of the world.

In the simulation phase of the seawater plant designed for the desalination operation, it was impossible to determine the effect of biofouling during the actual operation of the plant. Therefore, as can be observed in Table 2, the operating pressure expected after three years of operation was 61.4 bar, considering severe biofouling of the membranes as it is an offshore inlet. In turn, the design recovery was 42 % and desalinated water production was 41.67 m³/h. However, the presence of natural organic material in the feed water, as well as having experienced various episodes of red tide and algae bloom meant that the real results after a year of operation did not reach the design values, as shown in Table 2. In said Table 2, a comparison between design values and real operating values can be observed. As shown in said Table 2, the operating pressure was noticeably higher (69 bar) and production and recoveries were affected, causing higher energy consumption (7.21 % higher) per cubic metre produced.

**Table 2. Comparison of operating data between design and real data finally obtained**

| | Recovery (%) | Operating pressure (bar) | Production (m³/h) | Consumption (kWh/m³) |
|---|---|---|---|---|
| Original design | 42 | 61.40 | 41.67 | 2.08 |
| Real operating data | 38 | 69.00 | 37.70 | 2.23 |
| | | Total increase in energy consumption (%) | | 7.21 |

### b) Loss in production per membrane installed in the pressure pipes

In a conventional reverse osmosis seawater plant, the membranes desalinating the water are introduced in a pressure pipe which can contain between six (6) and seven (7) membranes, with each membrane being capable of desalinating/producing at most 10 % of the volume of flow supplied to it. The loss in production efficiency per membrane throughout the pipe is due to the fact that the salinity of the water supplied to each membrane varies depending on the water produced by the preceding membranes, resulting in a feed water to each membrane of the pipe with a higher saline content than the preceding one, whereby reducing production capacity.

In this manner, when a reverse osmosis desalination frame is designed, each membrane of the pipe produce a different volume of flow, as can be observed in the following table (Table 3). Therefore, the final production corresponds to the sum of the individual productions of each of the membranes connected in series in each pipe.

**Table 3. Comparison of production per membrane inside a pressure pipe between the design values and the real data obtained**

| | **Production per membrane (m³/h)** | | | | | | | |
|---|---|---|---|---|---|---|---|---|
| Position of the RO membrane | 1 | 2 | 3 | 4 | 5 | 6 | 7 | Pipe total |
| Original design | 0.9 | 0.7 | 0.6 | 0.5 | 0.3 | 0.3 | 0.2 | 3.5 |
| Real operating data | 0.8 | 0.6 | 0.5 | 0.4 | 0.3 | 0.3 | 0.2 | 3.1 |
| | | | | | | Loss in production (%) | | 12 |

In view of the results provided in Table 3, a loss in production fundamentally occurring in the first membranes installed in the pressure pipe can be observed. This loss in production requires increasing the operating pressure in the pressure pipe containing the reverse osmosis membranes so that a large amount of water is able to permeate through same, with the energy consumption increasing and the problem due to biofouling becoming worse because a larger amount of natural organic material is deposited on the surface of the membranes. Therefore, in addition to the increase in energy consumption of 7.21 % as described in the preceding section, there was also a loss in production of desalinated water of 12 % (see Table 3).

### c) Higher differential pressure in the reverse osmosis frame

Differential pressure is understood to be the difference in pressure between the feed to the reverse osmosis membranes installed in the pressure pipe and the outlet pressure of the concentrate or brine, that is, the difference between P1 and P2 in Figure 2. A differential pressure higher than the design differential pressure in a pipe, frame or set of reverse osmosis membranes results in a loss in efficiency of the energy recovery system and also in a higher energy consumption. Therefore, because the effect of biofouling cannot be evaluated during the design phase of the reverse osmosis plant, in the event of using a booster pump in an energy recovery system with isobaric chambers, it will be harder to determine if the curve and characteristics of the booster pump will allow efficiently handling the unpredictable effect of biofouling. One of the advantages of the design object of the present invention is that it allows solving this problem, ensuring the differential pressure design value in the reverse osmosis frames and, therefore, the choice of more efficient pumping to overcome the pressure drop. In this manner, a higher energy consumption resulting from the loss in efficiency of the pumping equipment and energy recovery devices is avoided.

### d) Serious deterioration of the reverse osmosis membranes placed in the first and second positions of the pressure pipe

As described earlier, as a consequence of biofouling serious deterioration of the reverse osmosis membranes placed in the first and second positions of the pressure pipe occurs. In said membranes there is greater biological growth or biofouling, which is deposited on the surface of said membranes and their spacers, blocking the passage of feed water to the following membranes. Therefore, the operating pressure must be increased so as to ensure the passage of water through the membranes, as well as the design recovery.

### e) High pretreatment investment cost

To prevent the biofouling problem in membranes, in seawater or brackish water treatment plant design, large investments are typically made in complex pretreatments (conventional physicochemical treatments, dissolved air flotation or DAF, microfiltration, ultrafiltration, etc.). These processes require considerable energy and chemical consumption, which results in a higher investment and operating cost in desalination plants experiencing this problem.

### f) Losses in production associated with cleaning the membranes

Biofouling causes shutdowns in reverse osmosis production assemblies beyond what is considered in the design phase for cleaning the membranes, with the consequent loss in production. Likewise, given the organic nature of biofouling, the chemical products used in eliminating same have a high operative cost.

Concerning the aforementioned problems, different solutions have been described in the state of the art to solve the drawbacks resulting from biofouling.

Thus, for example, the invention described in WO2013163146 relates to a reverse osmosis system that comprises eliminating the natural organic material present in a feed stream by means of a pretreatment process which in turn comprises an initial ultrafiltration step.

Likewise, application WO2008038575 describes a system for preventing the pressure loss in a reverse osmosis system. To this end, a pretreatment unit is used, whereby the biofouling problem is eliminated, increasing the efficacy of the treatment plant.

Worthy of mention as non-patent literature is the publication by authors Abdullah Said AL-Sadi and Alaa Elsayed Ali at the International Desalination Association World Congress on Desalination and Water Reuse held in San Diego (USA) in 2015. This document sets forth the biofouling problem and how, with expensive pretreatments, the problem remains unsolved due to the low molecular weight natural organic material going through the membranes. The authors of this publication propose future solutions which entail a higher investment. Compared to these solutions, the present invention offers the advantage that it avoids incurring said cost overruns.

In general, all the preventive techniques for eliminating biofouling due to natural organic material or NOM prior to feeding water to reverse osmosis membranes have proven to be, in most cases, inefficient. The fundamental reason is because of the enormous investment and operating cost they require, being unable in most cases to retain the natural organic material which generates biofouling due to the very low molecular weight thereof and as a consequence of most of said natural organic material being dissolved instead of suspended. For this reason, the present invention relates to solving in an economically viable and effective manner the problem of the high costs and technological difficulties associated with the production of water by reverse osmosis technology in water with a high content of soluble and low molecular weight natural organic material and/or with operating problems due to biofouling. The main objective is to "coexist" with the problem instead of eliminating it by means of expensive pretreatments, maximally reducing the impact of biofouling due to low molecular weight natural organic material which, in most cases, is able to go through any of conventional prior pretreatment system.

### General Description of the Invention

For purposes of the present description, for the sake of simplicity each membrane element located inside a pressure pipe is referred to as "membrane".

Therefore, a first object of the invention relates to a method for treating brackish water or seawater by reverse osmosis technology, characterised in that it comprises:
(a) feeding a brackish water or seawater stream to a first filtering step taking place through at least a first reverse osmosis membrane located inside at least a first pressure pipe located in a first supporting structure or frame. The feed of the brackish water or seawater stream is carried out at a pressure greater than the osmotic pressure corresponding to the concentration of salts of said raw water stream supplied to the system. Typically, the pressure of the feed stream will depend on the raw water salinity, the recovery from the unit or the quality of the permeate water (the higher the pressure, the higher the quality of the permeate). In a general manner, this pressure may range between 57 and 70 bar for seawater and between 6 and 42 bar for brackish water. Likewise, the number of reverse osmosis membranes located in the pressure pipe or pipes of the first filtering step will preferably be one or two, in which case the membranes will be located in series. In turn, the total number of pressure pipes will depend on the volume of flow of the water to be treated and on what is to be produced. In this regard, it must be taken into account that the reverse osmosis membranes have a limited individual production capacity. Therefore, when a larger volume of feed water needs to be treated to obtain more water product, the number of membranes in the installation will need to be increased. However, since the system is efficient with a limited number of membranes connected in series, the solution for treating a higher volume of flow will entail increasing the number of pipes operating in parallel. In a general manner, the number of pipes operating in parallel may range between 2 and 500;
(b) after the seawater or brackish water passes through the first desalination step, there is obtained a first permeate stream and a first brine (or first backwater) stream that is sent to a second filtering step, which will preferably comprise five (5) or six (6) reverse osmosis membranes connected in series and installed inside at least one pressure pipe. In this second filtering step, there is obtained a second permeate stream (which can be pooled with the first permeate stream, corresponding to the first filtering step) and a second brine (second backwater) stream;
(c) pressure is monitored continuously throughout the entire process, so that when signs of biofouling in the membrane(s) are observed, such as, for example, an increase in the differential pressure in the membrane(s) of the first filtering step and/or in the pressure of the feed stream needed to reach a given production, the operation of said membrane(s) is halted, and they then undergo a cleaning step, during which the feed of the brackish water or seawater stream to be treated undergoes a first filtering step through at least a first reverse osmosis membrane located inside at least a second pressure pipe located in a second supporting structure or frame parallel to the first frame. The cleaning step of the first reverse osmosis membrane(s) located in the first frame is carried out preferably using the second brine (second backwater) stream, preferably after passing through at least one energy recovery device which may consist of a centrifugal-type pressure exchanger (such as, for example, an ERI exchanger, manufactured by Energy Recovery, Inc.), a piston exchanger (such as, for example, a DWEER, or Double Work Energy Exchanger Recovery) or a turbocharger. This stream (also referred to as cleaning stream) may circulate in the reverse direction with respect to the flow of the brackish water or seawater stream to be treated or in the same direction with respect to the flow of said stream, depending on the severity of the biofouling and the type of membrane used.

The preceding process will be repeated continuously, so that when the membrane(s) of the first filtering step by reverse osmosis in the operating phase shows/show signs of biofouling (for example, an increase in the differential pressure in said membrane(s)), the operation will be halted, transitioning to the cleaning mode, while at the same time the membrane(s) of the first filtering step by reverse osmosis which was/were up until that time in cleaning mode will be supplied or supplied again with the seawater or brackish water to be treated. This type of operation is referred to as the "revolver" type, due to the alternation in the operating and cleaning phases of the first filtering steps by reverse osmosis, operating in parallel and in alternation.

For purposes of this patent, brackish water is understood to be water with a salt content generally greater than 0.05 % and less than 3 % by volume. In turn, seawater or salt water is understood to be water with a salt content generally greater than 3 % and less than 5.5 % by volume.

In particular, the process will be suitable for treating brackish water or seawater with a dissolved, low molecular weight natural organic material content (generally less than 100,000 g/mol), such as, for example, fulvic acids with a molecular weight between 500 and 2,000 g/mol, humic acids with a molecular weight between 50,000 and 100,000 g/mol or carboxylic acids with a molecular weight equal to 5,000 g/mol. This capacity to reduce the impact of biofouling due to the low molecular weight natural organic material content present in the water to be treated is a particular advantage compared to other pretreatment methods in the state of the art, which do not eliminate compounds of this type.

Additionally, biofouling is understood to be the effect caused by the buildup of natural organic material adhered to the membranes of the reverse osmosis system.

In turn, the permeate stream of the process corresponds to the water stream going through the membranes and containing a salt content that is less than that of the water stream supplied to the system. Furthermore, the backwater stream corresponds to the water with a high concentration of salts which can either be flushed away or can be reused in the system as cleaning water.

Therefore, the volume of flow of the water to be treated circulates from the feed end to the opposite backwater or brine end, so that the backwater stream of each of the membranes is transformed into the feed of the next membrane. In turn, the permeate of each membrane is collected in a single stream, corresponding to the desalinated water stream (or final product of the process).

As a result of the described method (based on a "revolver"-type operation in which a series of membranes are operating while others, in parallel, are in the cleaning phase and vice versa), the biofouling problem taking place in reverse osmosis water treatment plants is reduced or even eliminated. Therefore, the membrane(s) located in the first filtering step (preferably one or two) are kept clean, reducing the energy consumption of the operation, which can be carried out automatically and continuously. This reduction of the energy consumption compared to the consumption required in conventional brackish water or seawater treatment plants can be at least 7 %, and in particular embodiments of the invention, even 15 %.

Furthermore, by reusing all or part of the backwater stream(s) (preferably 80 to 100 % by volume) in cleaning the membranes, the use of the chemical products typically used in said cleaning operation (which may consist, for example, of tetrasodium EDTA, NaOH, HCI, citric acid, etc.) is reduced.

Likewise, an additional advantage of the cleaning operation in those cases in which it is carried out in the reverse direction of the backwater stream(s) (in relation to the feed stream) is that it allows increasing the efficiency of eliminating the deposits (whether biological or otherwise) that may be clogging the spacers of the first membrane(s). Furthermore, cleaning one or two membranes (preferred number of membranes in the first filtering step) allows maximising the volume of flow sweeping across the surface of the membranes and, therefore, the capacity of entraining the material deposited on their surface and in the spacers of the membranes, improving the efficiency of the cleaning process. That is an enormous advantage compared to conventional systems, which are limited by the operating pressure of the washes, typically not more than 4 bar, as well as by the pressure drop occurring in each of the membranes contained in the pressure pipes, the usual number of membranes being 6 or 7. However, the invention is not limited to the washing process being carried out by backwashing, where it can also be carried out in the direction of the seawater or brackish water feed flow in production mode. In said case, the technical concepts explained above will also be applicable.

Likewise, an additional advantage of the process resulting from the elimination of the problem associated with the biofouling of membranes is the possibility of ensuring during real operation the values obtained in the design phase (with respect to production levels, energy consumption, required volume of chemicals, etc.).

Additionally, the invention also relates to the system used to carry out the method described above. Said system is characterised in that it comprises:
(a) a first membrane module comprising at least a first reverse osmosis membrane located inside at least a first pressure pipe located in a first supporting structure or frame and at least a first reverse osmosis membrane located inside at least a second pressure pipe located in a second supporting structure or frame, wherein the first reverse osmosis membrane located in the first pressure pipe and the first reverse osmosis membrane located in the second pressure pipe are configured for operating in parallel. Preferably, the number of reverse osmosis membranes located in each of the pressure pipes of the first membrane module will be one or two. Likewise, at least one valve or device suitable for discriminating the feed to the first reverse osmosis membrane located in the first pressure pipe or to the first reverse osmosis membrane located in the second pressure pipe will be located in the brackish water or seawater feed duct, so that during the operating phase the flow of the feed stream can be directed towards the membrane in the production phase at the same time that the alternative membrane is in the cleaning phase; and
(b) at least a second membrane module preferably comprising between five and six additional reverse osmosis membranes connected in series and located inside at least a third pressure pipe located in a third supporting structure or frame, wherein said second membrane module is connected in series with respect to the first membrane module through at least a first outlet duct of the first membrane module. This first outlet duct of the first membrane module is located at the end opposite that of the feed of the inlet stream and, in particular, corresponds to the backwater stream, with a second outlet duct of the first membrane module corresponding to the outlet of the final product (brackish water or seawater with a salt content less than that of the inlet stream). Preferably, successive membrane modules will be located in series with respect to the second membrane module, the total number of membrane modules preferably being equal to 2 for seawater and 3 for brackish water;
and wherein the second membrane module or the final module, in the event of there being successive modules in series, is characterised in that it comprises at least two outlet ducts, a first outlet duct corresponding to the outlet of the final product (water with a lower salt content with respect to the initial content of the brackish water or seawater) and a second outlet duct corresponding to the backwater stream. Said second duct (corresponding to the backwater stream) is preferably connected to the first membrane module (both to the first frame and to the second frame) at the end opposite that of the feed of the brackish water or seawater, where washing in the opposite direction with respect to the flow of the feed water is chosen, or at the same end as that of the feed to the system, in the event of preferring to wash the membranes in the same direction as that of the raw water flow in production mode. Additionally, both the first and the second supporting structure or frame of the first membrane module will comprise at least one duct for the outlet of the backwater corresponding to the cleaning stream, said duct being located at the end opposite that of the feed of the cleaning stream, namely, at the end corresponding to the feed of the brackish water or seawater to be treated if the membranes are backwashed, or at the end corresponding to the first backwater in the event that cleaning of the membranes is in the direction of the raw water flow in the production phase.

Preferably, the membranes used in the process will be made of aromatic polyamide and will be located inside the pressure pipes, spiral-wound.

### Brief Description of the Figures

To better understand the present specification, the following figures are attached as a non-limiting illustration of the invention:
- **Figure 1** depicts a general diagram of the state of the art corresponding to a particular distribution of the reverse osmosis membranes in 7 membranes connected in series and installed inside a single pressure pipe.
- **Figure 2** depicts the effect of biofouling. In particular, the top part shows a general diagram of the state of the art corresponding to a particular distribution of 7 reverse osmosis membranes connected in series and installed inside a single pressure pipe. The lower part depicts the same diagram affected by the biofouling problem.

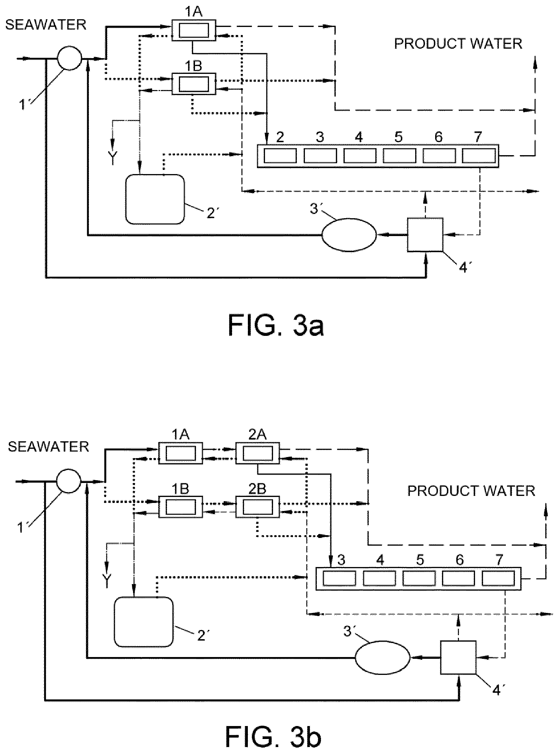

- **Figure 3A** depicts a first particular embodiment of the invention where the first membrane module comprises at least a first reverse osmosis membrane (1A) in the operating phase located inside at least a first pressure pipe located in a first supporting structure or frame and at least a first reverse osmosis membrane (1B) in the cleaning phase located inside at least a second pressure pipe located in a second supporting structure or frame.
- **Figure 3B** depicts a second particular embodiment of the invention. This second embodiment corresponds to the first embodiment, with the difference being that the first membrane module comprises at least two first reverse osmosis membranes (1A) and (2A) connected in series and in the operating phase located inside at least a first pressure pipe located in a first supporting structure or frame and at least two first reverse osmosis membranes (1B) and (2B) connected in series and in the cleaning phase located inside at least a second pressure pipe located in a second supporting structure or frame.

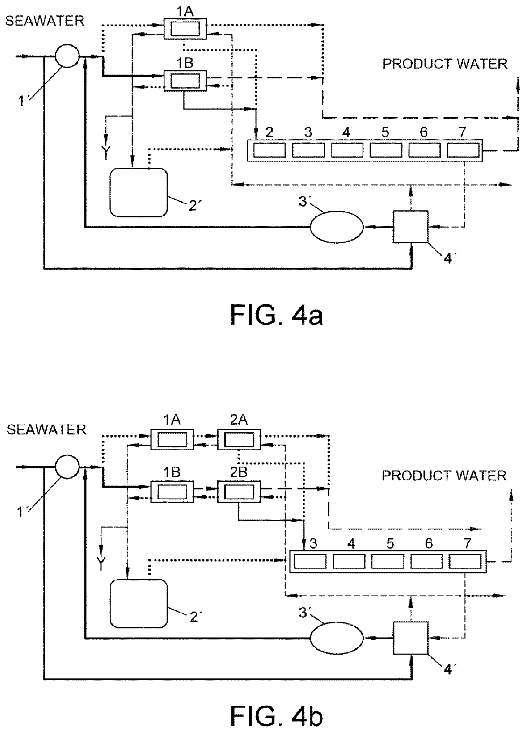

- **Figure 4A** depicts a third particular embodiment of the invention wherein the first membrane module comprises at least a first reverse osmosis membrane (1A) in the cleaning phase located inside at least a first pressure pipe located in a first supporting structure or frame and at least a first reverse osmosis membrane (1B) in the operating phase located inside at least a second pressure pipe located in a second supporting structure or frame.
- **Figure 4B** depicts a fourth particular embodiment of the invention. This fourth embodiment corresponds to the third embodiment, with the difference being that the first membrane module comprises at least two first reverse osmosis membranes (1A) and (2A) connected in series and in the cleaning phase located inside at least a first pressure pipe located in a first supporting structure or frame and at least two first reverse osmosis membranes (1B) and (2B) connected in series and in the operating phase located inside at least a second pressure pipe located in a second supporting structure or frame.

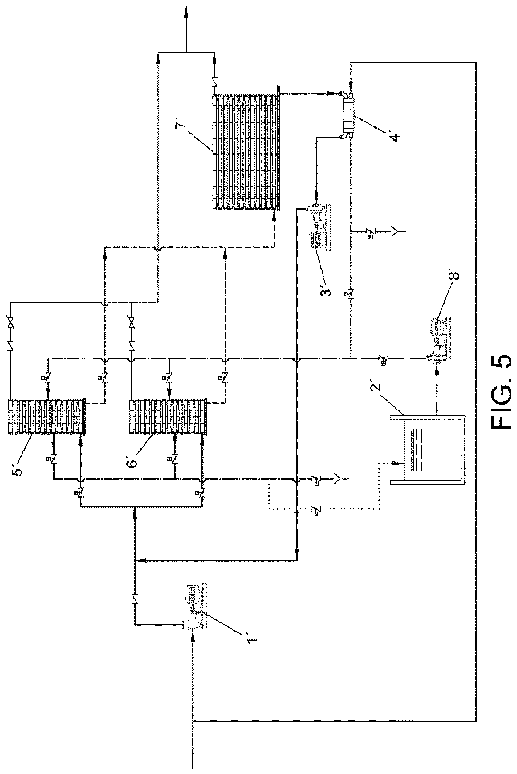

- **Figure 5** depicts a flow diagram of a particular embodiment of the system comprising:
   - a first supporting structure or frame (5') formed by 14 pressure pipes connected in parallel, each of them containing therein two reverse osmosis membranes;
   - a second supporting structure or frame (6'), parallel to the first supporting structure or frame (5'), which is in turn formed by 14 pressure pipes, each of them containing therein two reverse osmosis membranes; and
   - a third supporting structure or frame (7'), in series with respect to the first supporting structure or frame (5') and the second supporting structure or frame (6'), where said third supporting structure or frame (7') comprises 12 pressure pipes each of them containing therein five reverse osmosis membranes connected in series.

### Streams:

- In Figures 3A, 3B, 4A and 4B, the depicted lines correspond to the following streams:
   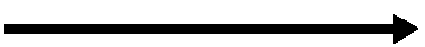 Feed (sea or brackish) water stream
   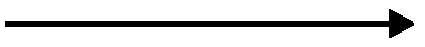 Brine or backwater stream of the first filtering step (first backwater)
   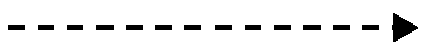 Brine or backwater stream of the last filtering step (second backwater)
   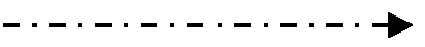 Backwater stream of the cleaning step
   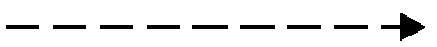 Permeate stream (final product)
   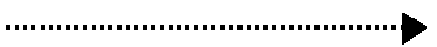 Inoperative line
- In turn, in Figure 5, the depicted lines correspond to the following streams:
   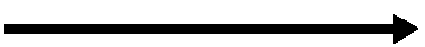 Feed (sea or brackish) water stream
   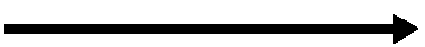 Permeate stream (desalinated water or final product)
   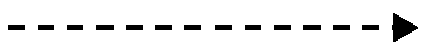 Brine or backwater stream corresponding to the first filtering step
   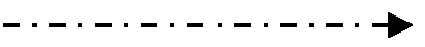 Brine or backwater stream corresponding to the last filtering step
   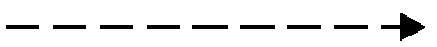 Chemical treatment feed stream
   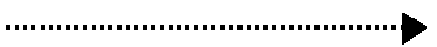 Chemical treatment outlet stream

### List of reference numbers:

1. First membrane module
   1A. First reverse osmosis membrane of the first membrane module (corresponding to the first filtering step), installed in a first pressure pipe located in a first frame;
   1B. First reverse osmosis membrane of the first membrane module (corresponding to the first filtering step) installed in a second pressure pipe located in a second frame, in parallel to the first frame;
   2A. Additional reverse osmosis membrane of the first membrane module (corresponding to the first filtering step), located inside the first pressure pipe, in series with respect to the first reverse osmosis membrane (1A) located in the first frame;
   2B. Additional reverse osmosis membrane of the first membrane module (corresponding to the first filtering step), located inside the second pressure pipe, in series with respect to the first reverse osmosis membrane (1B) located in the second frame;
2. Second reverse osmosis membrane
3. Third reverse osmosis membrane
4. Fourth reverse osmosis membrane
5. Fifth reverse osmosis membrane
6. Sixth reverse osmosis membrane
7. Seventh reverse osmosis membrane
1'. First pressure pump
2'. Chemical cleaning solution storage tank
3'. Second pressure pump (booster pump)
4'. Energy recovery device (ERD)
5'. First supporting structure or frame
6'. Second supporting structure or frame
7'. Third supporting structure or frame
8'. Third pressure pump (corresponding to the chemical cleaning product and cleaning solution recirculation stream)

### Detailed Description of the Invention

Included below is a detailed description of particular embodiments of the invention, as shown in Figures 3A, 3B, 4A, 4B and 5.

Therefore, there is observed in Figure 3A a particular embodiment of the invention in which the method for treating brackish water or seawater is characterised in that it comprises:
(a) feeding a brackish water or seawater stream to a first filtering step taking place through at least a first reverse osmosis membrane (1A) located inside at least a first pressure pipe located in a first supporting structure or frame. Preferably, the total number of membranes in each pressure pipe in this first frame will be one or two. The feed of the brackish water or seawater stream is carried out at a pressure greater than the osmotic pressure corresponding to the concentration of salts of said raw water stream supplied to the system. To this end, prior to the feed to the first reverse osmosis membrane (1A), said brackish water or seawater stream will be conducted through at least a first pressure pump (1');
(b) after the first filtering step occurs in the first reverse osmosis membrane (1A), there is obtained a first permeate (product water) stream and a first brine (or first backwater) stream that is then sent to a second filtering step formed by six (6) reverse osmosis membranes connected in series. After this second filtering step, there is generated a second permeate stream or product water, which is pooled with the first permeate stream or product water (corresponding to the first filtering step) and a second brine stream (second backwater);
(c) the preceding steps will be carried out until the first signs of biofouling in the first reverse osmosis membrane (1A) located in the first frame are observed, for example an increase in the differential pressure in said first reverse osmosis membrane (1A). Operation will be halted at that time, and it will then undergo a cleaning step. Until then, as observed in Figure 3A, at least a first reverse osmosis membrane (1B) located inside at least a second pressure pipe located in a second supporting structure or frame, parallel to the first frame, will undergo a cleaning process. Preferably, the total number of membranes in each pressure pipe in this second frame will also be one or two.

As also observed in Figure 3A, the cleaning step of the first reverse osmosis membrane(s) (1B) located in the second frame is carried out using all or part of the brine or backwater stream of the last filtering step, after passing through at least one energy recovery device (4'). Said brine or backwater stream of the last filtering step is therefore the cleaning stream, which is circulated in this particular embodiment in the reverse direction with respect to the flow of the brackish water or seawater stream to be treated, for the purpose of ensuring maximum flow and eliminating the biological pollutant by osmotic shock and, in turn, being able to sweep away the suspended solids that may have been deposited in the head element of the first reverse osmosis membrane (1B) located in the second frame. This is achieved because, as a consequence of the characteristics of the method object of the invention, a larger volume of flow of the cleaning stream reaches the reverse osmosis membranes than what occurs in a conventional cleaning process. Furthermore, as described above, in other embodiments (not shown in Figure 3A) the process may be carried out in the same way as described in this section, with the exception that the flow of the brine stream used in cleaning will be in the same direction as the flow of the raw feed water stream.

Additionally, in particular embodiments in which the cleaning operation of the first reverse osmosis membrane (1B) located in the second frame is to be reinforced, it will be possible to additionally use a conventional membrane washing system of the type typically used in the state of the art, consisting for example of a storage receptacle or tank (2'), where a cleaning solution is diluted and stored, and a recirculation pump which allows the repeated passage of the cleaning solution through the first reverse osmosis membrane (1B) located in the second frame. The cleaning solution is pumped from the storage receptacle or tank (2') to the second frame for cleaning the first reverse osmosis membrane (1B) located in said second frame, and after the passage of the cleaning solution through said first reverse osmosis membrane (1B), all or part of said cleaning solution is collected in the storage receptacle or tank (2') from where it is again sent to the second frame, being a closed-circuit cleaning. The cleaning solution used in the system will be selected according to the degree of biofouling of the membranes, where it may comprise, among others, tetrasodium EDTA, NaOH, HCI or nitric acid. In a preferred embodiment of the invention, said cleaning solution may comprise 5 ppm of EDTA and 7 ppm of NaOH, if the membranes undergo alkaline cleaning, or 6 ppm of HCI and 3 ppm of nitric acid, if the cleaning is acid cleaning.

There is observed in Figure 3B a method equivalent to the one described above in relation to Figure 3A. In this case, however, after the first filtering step in at least a first reverse osmosis membrane (1A), there is obtained a first permeate (product water) stream and a first brine (or first backwater) stream that is then sent to at least a first additional reverse osmosis membrane (2A) also located in the first pressure pipe, in series with respect to the first reverse osmosis membrane (1A). The brine stream obtained in the second filtering step taking place in said additional reverse osmosis membrane (2A) is conducted to a third filtering step and so on to a seventh filtering step, so that the backwater of each filtering step is the feed of the following filtering step.

As observed in Figure 3B, during the operation of the first reverse osmosis membrane (1A) and of the additional reverse osmosis membrane (2A) located in the first frame, at least a first reverse osmosis membrane (1B) located in a second frame and at least one additional reverse osmosis membrane (2B) also located in the second frame, in series with respect to the first reverse osmosis membrane (1B), may undergo a cleaning step in case of showing signs of biofouling. To this end, in the particular embodiment shown in Figure 3B, there will be circulated through same, in the reverse direction with respect to the flow of the raw feed water stream, all or part of the backwater stream corresponding to the last filtering step, preferably after passing through at least one energy recovery device (4'). As described above, in alternative embodiments of the invention, the process may be carried out as described, with the exception that the backwater stream corresponding to the last filtering step, used in the cleaning, will be circulated in the same direction as that of the flow of the raw feed water stream. Furthermore, in particular embodiments in which there is no energy recovery device, the backwater stream of the last filtering step will be sent directly to the membrane(s) showing signs of biofouling for cleaning same, after reducing the pressure preferably to a pressure equal to or less than 4 bar, which is the maximum pressure recommended for cleaning membranes. In this case, needle valves may preferably be used.

Additionally, to reinforce the cleaning operation of the reverse osmosis membranes (1B) and (2B), it will be possible to additionally use a conventional membrane washing system of the type typically used in the state of the art. This washing system may comprise a storage receptacle or tank (2') where a cleaning solution is diluted and stored, and a recirculation pump which allows the repeated passage of the cleaning solution through the membranes (1B) and (2B). Therefore, the cleaning solution is pumped from the storage receptacle or tank (2') to the reverse osmosis membranes (1B) and (2B) and, after the passage of the cleaning solution through said membranes, all or part of said cleaning solution is collected in the storage receptacle or tank (2'), from where it will again be sent to the membrane(s) which require undergoing a cleaning process, being a closed-circuit cleaning.

Although Figures 3A, 3B, 4A and 4B show a closed circuit in the cleaning operation, in other embodiments of the invention all or part of the backwater stream used in cleaning the membranes may be flushed away as a drain stream.

Figure 4A shows a particular embodiment of the method object of the invention, equivalent to the one described in relation to Figure 3A, with the difference being that in this case the first reverse osmosis membrane (1A) corresponding to the first filtering step, located in the first frame, is in cleaning mode, circulating the backwater stream coming from the last filtering step, whereas, at the same time, the first reverse osmosis membrane (1B) corresponding to the first filtering step, located in the second frame operating in parallel to the first reverse osmosis membrane (1A) of the first frame, is in the operating phase. Therefore, the raw water stream supplied to the system, after having been subject to a process to increase pressure through at least a first pressure pump (1') until reaching a pressure greater than the osmotic pressure corresponding to the concentration of salts of said raw water (brackish water or seawater) stream, is supplied to the first reverse osmosis membrane (1B) corresponding to the first filtering step, located in the second frame. As described above, the backwater of this first filtering step is the feed of the following filtering step (corresponding to the second filtering step) and so on until the last filtering step (corresponding to the seventh filtering step). The cleaning process of the first reverse osmosis membrane (1A) located in the first frame will be equivalent to the one described in relation to the embodiment shown in Figure 3A, using all or part of the backwater stream of the last filtering step as the cleaning stream, which is driven through the first reverse osmosis membrane(s) (1A) after passing through an energy recovery device (4'), in a flow opposite the direction of the raw water stream supplied to the system. As described above, in alternative embodiments of the invention the process would be the same as the one described, with the exception that the flow of the volume of flow of the last filtering step used in the cleaning would have the same direction as that of the raw water stream supplied to the system. As described above, the use of the energy recovery device (4') is optional, therefore in other particular embodiments of the invention, the backwater stream of the last filtering step will be sent directly to the membrane(s) that needs to be cleaned, after reducing the pressure preferably to a pressure equal to or less than 4 bar, which is the maximum pressure recommended for cleaning membranes.

Figure 4B, in turn, describes a system equivalent to the one described in relation to Figure 4A, with the difference being that after filtering the raw water (brackish water or seawater) stream in at least a first reverse osmosis membrane (1B) located in the second frame, corresponding to the first filtering step, there is obtained a permeate (product water) stream and a brine (or first backwater) stream that is then sent to at least one additional reverse osmosis membrane (2B) also located in the second frame, in series with respect to the first reverse osmosis membrane (1B), where a second filtering step takes place. The brine stream obtained in the second filtering step is conducted to a third filtering step and so on until a seventh filtering step, so that the backwater of each filtering step is the feed of the following filtering step.

Likewise, Figure 4B shows an embodiment in which, at the same time as the first reverse osmosis membrane (1B) located in the second frame, corresponding to the first filtering step and an additional reverse osmosis membrane (2B) are operating, the first reverse osmosis membrane (1A) located in the first frame and an additional reverse osmosis membrane (2A) also located in the first frame, in series with respect to the first reverse osmosis membrane (1A), are in the cleaning phase, passing the backwater stream of the last filtering step (corresponding to the seventh filtering step), after being subjected to an energy recovery process in at least one energy recovery device (4'), in the opposite direction with respect to the flow of the raw water stream supplied to the system. Again, in alternative embodiments of the invention, the process can be carried out in the same way as described, with the exception that the flow of the stream of the last filtering step, which is used in the cleaning, will be circulated in the same direction as that of the feed stream of the raw stream to be treated. Again, in particular embodiments in which there is no energy recovery device (4'), the backwater stream of the last filtering step will pass directly through the membranes that are in cleaning mode, after reducing the pressure preferably to a pressure equal to or less than 4 bar, which is the maximum pressure recommended for cleaning membranes.

Additionally, to reinforce the cleaning operation of the reverse osmosis membranes (1A) and (2A), a conventional membrane washing system of the type typically used in the state of the art could additionally be used. Said washing system may consist of a storage receptacle or tank (2') where the cleaning solution is diluted and stored, and a recirculation pump which allows the repeated passage of the cleaning solution through the membranes (1A) and (2A) from the storage receptacle or tank (2') where the cleaning solution is prepared and stored. After the passage of the cleaning solution through said membranes (1A) and (2A), said cleaning solution is collected in the storage receptacle or tank (2'), from where it is again sent to the membranes that requires a cleaning process, being a closed-circuit cleaning.

The process described in the four preceding embodiments as shown in Figures 3A, 3B, 4A and 4B is carried out continuously and can reversed as soon as an increase in differential pressure in the first membrane(s) is observed in the operating phase (corresponding to the first or the first and second filtering step) due to biofouling of the reverse osmosis membranes corresponding to said first filtering steps. At this point, the membrane(s) in the operating phase will transition to cleaning mode, washing it/them with the backwater (brine) stream coming from the last filtering step, circulating it in the reverse direction with respect to the flow of the raw water feed stream to the system, or in the same direction as said stream. At the same time, the reverse osmosis membrane(s) located in parallel to the membrane(s) will begin to operate in the cleaning phase, and so on.

Therefore, the process will alternate as the membrane(s) located in the first or first and second filtering step show signs of biofouling, at which point they will enter the cleaning mode and the membrane(s) that was/were in the cleaning mode with brine will enter the production mode. Hence, the concept of operating in "revolver" mode.

Although the figures attached to this description show two frames operating in parallel in the first filtering step, in other particular embodiments of the invention the system may comprise (one or more) additional frames operating in parallel in the first filtering step. Each of them will be in the cleaning phase or in operation (treating a given percentage of the feed water), depending on the conditions of the process, where the operation can be reversed when the time comes between the operating or cleaning phase, as described earlier.

### Example

To verify the efficacy of the process object of the invention, a simulation of a particular embodiment of the invention as can be observed in Figure 5 was carried out.

Specifically, the feed stream object of the simulation met the following technical characteristics:

**Table 4. Characteristics of the feed stream**

| **Ion** | **mg/l** | **meq/l** |
|---|---|---|
| Ca | 840.0 | 41.9 |
| Mg | 1166.0 | 96.0 |
| Na | 12723.8 | 553.2 |
| K | 440.0 | 11.3 |
| CO₃ | 14.6 | 0.5 |
| HCO₃ | 192.0 | 3.1 |
| SO₄ | 3152.4 | 65.7 |
| CI | 22463.1 | 633.7 |
| F | 1.1 | 0.1 |
| NO₃ | 0.4 | 0.0 |
| B | 4.90 | |
| SiO₂ | 0.5 | |
| CO₂ | 1.49 | |
| | | |
| TDS | | 40998.8 |
| PH | | 7.80 |
| CaSO4 / kps (solubility product) * 100 | | 45 % |
| SiO₂ (saturation) | | 0% |
| Stiff & Davis saturation index | | 0.36 |
| Ionic strength | | 0.80 |
| Osmotic pressure (bar) | | 29.9 |

The simulated process, as shown in Figure 5, is characterised in that it comprises subjecting a brackish water or seawater stream with the characteristics provided in Table 4 to a first step of increasing pressure in the first pressure pump (1') until reaching a pressure of 61.1 bar. Next, said brackish water or seawater stream is supplied to a first reverse osmosis membrane located inside each of the 14 pressure pipes located in a first supporting structure or frame (5'). The backwater stream obtained in said first reverse osmosis membrane is then sent to a second reverse osmosis membrane located in series with respect to the first reverse osmosis membrane, inside each of the 14 pressure pipes located in the first supporting structure or frame (5'). After filtering in the second filtering step, there is obtained a first permeate stream (corresponding to the desalinated water or final product) and a brine (or second backwater) stream that is then sent to a third filtering step, located in series with respect to the previous one, and so on, so that the backwater stream of each filtering step is the feed of the following filtering step. The total number of filtering steps is 7, including the two first steps previously mentioned. In particular, the third to seventh filtering steps take place in the third supporting structure or frame (7'), which comprises 12 pressure pipes, each of them containing therein 5 reverse osmosis membranes. After these filtering steps, there is generated a second permeate stream (which is pooled with the first permeate stream, corresponding to the first filtering step) and a brine stream corresponding to the backwater of the last filtering step.

Pressure is monitored continuously throughout the entire process, so that once an increase in the differential pressure in the first membrane(s) and/or the feed pressure to the membranes of the first and/or second filtering step requires being increased to maintain production is observed, the operation will be halted, and it/they then undergoes/undergo a cleaning step. In this cleaning step, the feed of the brackish water or seawater stream to be treated undergoes a first filtering step through a first reverse osmosis membrane located inside each of the 14 pressure pipes located in a second supporting structure or frame (6'), parallel to the first frame (5'). Like in the previous case, the backwater stream obtained in said first reverse osmosis membrane located in the second frame (6') is then sent to an additional reverse osmosis membrane located in series with respect to the first reverse osmosis membrane inside each of the 14 pressure pipes of the second supporting structure or frame (6'). After filtering in the second filtering step, there is obtained a permeate stream (corresponding to the desalinated water or final product) and a brine (or second backwater) stream that is then sent to a third filtering step, located in series with respect to the previous one, and so on, so that the backwater stream of each filtering step is the feed of the following filtering step. As described above, the total number of filtering steps is 7, including the two first steps previously mentioned. During the operation of these reverse osmosis membranes, the first reverse osmosis membranes are cleaned, preferably using all or part of the brine stream corresponding to the backwater of the last filtering step, after passing through an energy recovery device (ERD) (4') where it is depressurised, decreasing the pressure preferably to 1.5 bar. Another part of the final brine stream can be returned to the sea, preferably in a percentage less than 20 %, although said percentage may vary depending on the number of frames that are installed in the first filtering step and operate in parallel in revolver mode. In the particular embodiment shown in Figure 5, this brine stream is circulated in the reverse direction with respect to the flow of the brackish water or seawater stream to be treated, although in other embodiments it could be circulated in the same direction as the flow of the seawater or brackish water stream to be treated. As also described above, for the purpose of reinforcing the cleaning operation, a conventional membrane washing system of the type typically used in the state of the art can additionally be used, consisting of a storage receptacle or tank (2') where the cleaning solution is diluted, and a recirculation pump (8') which allows the repeated passage of the cleaning solution through the membrane(s) that is/are in cleaning mode. After the passage of the cleaning solution through said membranes, all or part of said cleaning solution is collected again in the storage receptacle or tank (2'), from where it will again be sent to the frame that is in the cleaning mode (5') or (6'), being a closed-circuit cleaning.

It has been demonstrated that the design of the operation as described above allows solving the problems of the state of the art listed in the background section of the invention. The manner in which each of these problems has been solved will be explained in detail below:

### (a) Solving the problem of higher operating pressure and, therefore, higher energy consumption associated with desalination plants that experience biofouling

Given that the proposed design allows permanently keeping the membranes located in the first position (and also in the second position in particular embodiments of the invention) clean by washing them with brine, the effects of biofouling are prevented, which allows the operating conditions over time to coincide with the design conditions.

Therefore, the following table (Table 5) compares the results obtained in the design phase in an operation carried out in a conventional system, as shown in Figure 1, with the values obtained during the actual operation of the system (operating according to the conventional system) and the design values in an embodiment as described and shown in Figure 5.

**Table 5. Comparison of design results and real operating results**

| **Filtering** step | **1** | **2** | **3** | **4** | **5** | **6** | **7** |
|---|---|---|---|---|---|---|---|
| Operating pressure (bar) in original design (Figure 1) | 61.4 | 61.1 | 60.9 | 60.7 | 60.5 | 60.3 | 60.2 |
| Real operating pressure (bar) | 69.0 | 68.58 | 68.31 | 68.03 | 67.75 | 67.48 | 67.34 |
| Operating pressure (bar) in design according to Figure 5 | 61.1 | 60.9 | 60.7 | 60.5 | 60.3 | 60.1 | 60.0 |

As can be observed in the preceding table (Table 5), the fact that the operating mode and design of the system object of the invention allows keeping the effects of biofouling under control makes it possible to operate under the original design conditions and even improve them. It is thus demonstrated that the method and system object of the invention prevents the overpressures produced during real operation due to the harmful effects of biofouling.

Observed in the following table (Table 6) is an improvement in energy consumption of the design object of the invention (as shown in Figure 5), as it keeps biofouling under control. The comparison has been made with the values obtained in the plant operating according to the conventional system:

**Table 6. Comparison of energy consumptions**

| | Recovery (%) | Operating pressure (bar) | Production (m³/h) | Consumption (kWh/m³) |
|---|---|---|---|---|
| Design object of the invention | 42 | 61.10 | 41.67 | 1.97 |
| Real operating data | 38 | 69.00 | 37.70 | 2.23 |
| | | Improvement in energy consumption (%) | | 13.20 % |

As can be observed in Table 6, there is an improvement in energy consumption of up to 13.20 %, fundamentally due to keeping the membranes located in the first and second filtering steps permanently clean.

### (b) Solving the problem of loss in production per membrane installed in the pressure pipes

As described above, there is a loss in production in conventional systems which, in general, require increasing the operating pressure in the pressure pipe or pipes containing the reverse osmosis membranes in order to achieve a larger amount of water permeating through the membranes. This implies, as described, the energy consumption increasing and the problem due to biofouling becoming worse because a larger amount of natural organic material is deposited on the surface of the membranes. Therefore, in addition to the increase in energy consumption, there is also a loss in production of desalinated water of up to 12 %, which affects production goals.

As can be observed in Table 7, the design and operation object of the present invention allow keeping production of the reverse osmosis membranes at their design values, since the state and cleanliness of the membranes placed in the first positions are ensured at all times. This ensures optimal production thereof and the passage of water to the membranes installed in the following positions.

**Table 7. Comparison between original design data, real operating data (according to the conventional design) and design data according to the invention as shown in Figure 5 (Production per membrane, m³/h)**

| **Filtering** step | **1** | **2** | **3** | **4** | **5** | **6** | **7** | **Total** |
|---|---|---|---|---|---|---|---|---|
| Original design (Figure 1) | 0.9 | 0.7 | 0.6 | 0.5 | 0.3 | 0.3 | 0.2 | 3.5 |
| Real operating data (Figure 1) | 0.8 | 0.6 | 0.5 | 0.4 | 0.3 | 0.3 | 0.2 | 3.1 |
| Design data according to Figure 5 | 0.9 | 0.7 | 0.6 | 0.5 | 0.3 | 0.3 | 0.2 | 3.5 |

### (c) Solving the problem of higher differential pressure in the reverse osmosis frame

As described above, because the effect of biofouling is impossible to be determined in the design phase of the reverse osmosis plant, it is extremely difficult to evaluate whether the curve and characteristics of the booster pump or other pumping or energy recovery systems installed in the system will allow efficiently handling the unpredictable effect of biofouling. The design object of the present invention, however, allows ensuring the differential pressure design value in the reverse osmosis frames and, therefore, the choice of more efficient pumping, thereby preventing the higher energy consumption resulting from the loss in efficiency of the pumping equipment and energy recovery devices.

As can be observed in Table 8, which establishes a comparison between the pressure drop in the membranes installed according to the original design, the real operating data and the operating mode and design object of the invention, it can be concluded that the "revolver"-type operating system allows keeping the differential pressure in each membrane at its design values at all times. This is because whenever there is observed an increase in the pressure drop in the first membranes, where the effect of biofouling occurs, said membranes will go to washing mode, and the membranes which were in washing mode up until that time start to operate, the latter ensuring a pressure drop according to the design because they are clean.

**Table 8. Comparison between original design data, real operating data (according to the conventional design) and design data according to the invention as shown in Figure 5**

| **Filtering step** | **1** | **2** | **3** | **4** | **5** | **6** | **7** |
|---|---|---|---|---|---|---|---|
| Operating pressure (bar) in original design | 61.4 | 61.1 | 60.9 | 60.7 | 60.5 | 60.3 | 60.2 |
| Real operating pressure (bar) | 69.0 | 68.58 | 68.31 | 68.3 | 67.75 | 67.48 | 67.34 |
| Operating pressure (bar) in system design according to Figure 5 | 61.1 | 60.9 | 60.7 | 60.5 | 60.30 | 60.1 | 60.0 |
| Real operating pressure (bar) in system according to Figure 5 | 62.5 | 62.3 | 62.1 | 61.9 | 61.70 | 61.5 | 61.4 |

The preceding table (Table 8) shows a real operating pressure of the design and operation according to the present invention greater than that of the design, since aging of the membranes has been considered a factor. However, as described above, being able to replace the first membranes which start to experience biofouling problems with washed membranes ensures that the pressure drop in the first membranes will remain constant, not like in current systems where the pressure drop due to biofouling is concentrated in the first membranes, affecting the rest of them that are installed in the system.

### (d) Solving the problem of serious deterioration of the reverse osmosis membranes placed in the first or in the first and second positions of the pressure pipe

As described above, in the reverse osmosis membranes of the first and second filtering steps is where the greatest biological growth or *biofouling* occurs, being deposited on their surface and their spacers, blocking the passage of feed water to the following membranes. The passage of water to the following membranes is thus reduced, and the operating pressure is increased for the purpose of ensuring the design recovery of the reverse osmosis membranes. Furthermore, the production capacity of the system is reduced, because the passage of water to the following membranes connected in series with respect to the first reverse osmosis membrane(s) of the installation is reduced.

It is a proven fact in practice that in plants experiencing severe biofouling, the membranes installed in the first positions of the pipes have to be replaced more often than what is normally considered by the design. With the operating mode and design object of the invention, this problem is solved because at the slightest sign of biofouling of the membranes placed in the first positions, they are washed with brine, which allows maintaining their production according to design.

It should be pointed out that flow through membrane is defined as the amount of water going through the membrane per square metre of surface thereof and per hour. This flow is determined in units of l/m²h (litres per square metre of membrane surface and per hour). The higher this value, the greater the production effort to which the membrane is subjected, increasing the risk of biofouling of said membrane. As a result of the operating mode and design object of the invention, the membranes in positions 1 or 1 and 2 have a smaller flow per membrane, which means that they will experience less biofouling. Furthermore, the design and operating mode object of the invention allow keeping the flow through membrane values constant, according to design, since it is ensured that the membranes placed in the first positions remain clean at all times. Therefore, in the event of a decrease in flow in the membranes located in the first positions, there will not be an increase in the operating pressure of the system, but rather the module which, until then, was in the cleaning phase with brine will simply begin to operate, thereby restoring the flow through membrane associated with clean and/or new membranes.

It can be observed in the following table (Table 9) how flows through membrane vary in the original design and in the design object of the present invention. The results reflected in said table allow concluding that the flow through membrane in the proposed design is less aggressive than in the conventional design, ensuring a longer service life of the membranes and a better performance thereof during their time of use.

**Table 9. Comparison of water flow going through the reverse osmosis membranes**

| **Filtering step** | **1** | **2** | **3** | **4** | **5** | **6** | **7** | **Mean flow** |
|---|---|---|---|---|---|---|---|---|
| Flow through membrane (l/m²h) in the original design (Figure 1) | 21.6 | 17.8 | 14.3 | 11.2 | 8.5 | 6.5 | 5.0 | 12.10 |
| Flow through membrane (l/m²h) with a first filtering step with membranes operating in parallel, according to the object of the invention | 21.1 | 16.9 | 13.6 | 10.7 | 8.10 | 6.2 | 4.8 | 11.9 |
| Flow through membrane (l/m²h) with a first and a second filtering step with membranes operating in parallel, according to the object of the invention | 20.8 | 16.6 | 12.8 | 10.2 | 7.70 | 5.9 | 4.60 | 11.60 |

### (e) Solving the problem of the high pretreatment investment cost

As described above, the solution object of the present invention allows installing systems which are much more demanding in terms of operation and investment than in the case of a conventional system, since it is based on coexisting with the biofouling problem, keeping it controlled at all times, instead of eliminating it altogether. Therefore, the savings in investment cost may be up to 30 %.

### (f) Solving the problem associated with losses in production due to cleaning the membranes

As described above, the biofouling that reverse osmosis membranes are subjected to causes, beyond higher energy consumptions and losses in production, production shutdowns in reverse osmosis assemblies to clean the membranes. The frequency of these shutdowns will depend on the severity of the biofouling, and their frequency will increase the operating cost of desalination plants. Furthermore, the greater the severity of biofouling and, therefore, the number of times the membranes are cleaned, the higher the cost of the chemical products used, and the greater the expenses associated with cleaning (expenses for personnel, chemical products, production shutdowns, logistics, etc.).

Furthermore, when cleaning is performed in a pressure pipe, frame or reverse osmosis assembly, chemical products are normally used, which are aggressive against all the installed membranes, including those which are in perfect conditions (corresponding to filtering steps 3 to 7). This entails a lower efficiency of the chemical reagents used, which are to go through all the membranes with the subsequent pressure drop, as well as the longer time required for cleaning.

With the solution object of the present invention, only the membranes placed in first position undergo cleaning with brine coming from the backwater of the last filtering step, without halting production. Therefore, this prevents severe biofouling from occurring, and it is able to identify same when production begins, at which point it is contained by continuously cleaning with brine. It has been demonstrated that the high salinity of brine causes osmotic shock in the biofouling deposited on the surface of the membranes, causing it to detach and disappear. Additionally, an increase in the energy consumption associated with cleaning is prevented, since the reverse osmosis outlet brine is pressurised by preferably using energy recovery systems with isobaric chambers which generally require a minimum backpressure of 1.5 bar prior to being flushed away, energy which is currently being wasted and is now used by the present invention to wash the membranes located in the first positions with the reverse osmosis outlet brine. At the same time, the use of chemical products, which may seriously damage the membranes, is avoided or reduced. In the event of no energy recovery system being used, the pressure available for cleaning the membranes with brine would be greater than 1.5 bar and should be regulated so as not to exceed, preferably, a pressure of 4 bar.

## Claims

1. A method for treating brackish water or seawater, **characterised in that** it comprises:
(a) subjecting a brackish water or seawater stream to a first filtering step through at least a first reverse osmosis membrane (1A) located inside at least one pressure pipe located in a first frame (5'), obtaining a first permeate stream and a first brine stream;
(b) then, said first brine stream is sent to at least one additional filtering step, which takes place through at least one additional reverse osmosis membrane, located in series with respect to the first reverse osmosis membrane (1A) and located inside at least one pressure pipe located in a third frame (7'), obtaining a second permeate stream and a second brine stream;
wherein the pressure is continuously monitored throughout the process so that when signs of biofouling of the first reverse osmosis membrane (1A) are observed, the operation is halted, and it then undergoes a cleaning step during which the feed of the brackish water or seawater stream undergoes the first filtering step through at least a first reverse osmosis membrane (1B) located inside at least one pressure pipe located in a second frame (6'), operating in parallel with respect to the first frame (5'), wherein said cleaning step of the first reverse osmosis membrane (1A) is carried out using the second brine stream, circulating in the reverse direction or in the same direction as the flow of the brackish water or seawater stream supplied to the process;
and wherein the previous process is repeated continuously in alternation, so that when signs of biofouling in the first reverse osmosis membrane (1B) located in the second frame (6') are observed in the operating phase, the operation is halted, transitioning to the cleaning mode, while at the same time the first reverse osmosis membrane (1A) located in the first frame (5') is operating again, being supplied with the brackish water or seawater to be treated.

2. The method according to claim 1, wherein the feed of the brackish water or seawater stream to the first filtering step is carried out at a pressure greater than the osmotic pressure corresponding to the concentration of salts of said brackish water or seawater stream.

3. The method according to any one of the preceding claims, wherein the number of reverse osmosis membranes located in each pressure pipe of the first filtering step is one or two.

4. The method according to any one of the preceding claims, wherein the total number of filtering steps in the process is 7.

5. The method according to any one of the preceding claims, wherein the first brine stream obtained in the first filtering step goes through at least one additional reverse osmosis membrane (2A) located in the first frame (5'), in series with respect to the first reverse osmosis membrane (1A), before being sent to the additional reverse osmosis membrane located in the third frame (7'), while at the same time the first reverse osmosis membrane (1B) located in the second frame (6') and at least one additional reverse osmosis membrane (2B), also located in the second frame (6'), in series with respect to the first reverse osmosis membrane (1B) located in the second frame (6'), are in cleaning mode.

6. The method according to any one of claims 1 to 4, wherein the first brine stream obtained in the first filtering step goes through at least one additional reverse osmosis membrane (2B) located in the second frame (6'), in series with respect to the first reverse osmosis membrane (1B), before being sent to the additional reverse osmosis membrane located in the third frame (7'), while at the same time the first reverse osmosis membrane (1A) and at least one additional reverse osmosis membrane (2A) located in the first frame (5'), in series with respect to the first reverse osmosis membrane (1A) located in the first frame (5'), are in cleaning mode.

7. The method according to any one of the preceding claims, wherein the second brine stream, used as a cleaning stream, is passed through an energy recovery device (4') before going through the reverse osmosis membrane(s) undergoing cleaning.

8. A system used to carry out the method according to any one of claims 1 to 7, **characterised in that** it comprises:
(a) a first membrane module comprising at least a first reverse osmosis membrane (1A) located inside at least one pressure pipe located in a first frame (5') and at least a first reverse osmosis membrane (1B) located inside at least one pressure pipe located in a second frame (6'), wherein the first reverse osmosis membrane (1A) located in the first frame (5') and the first reverse osmosis membrane (1B) located in the second frame (6') are configured for operating in parallel;
(b) at least a second membrane module comprising at least one additional reverse osmosis membrane located inside at least one pressure pipe located in a third frame (7'), wherein said second membrane module is connected in series with respect to the first membrane module through at least a first outlet duct of the first membrane module, located at the end opposite the feed of the inlet stream and, in particular, corresponding to the duct of the backwater stream of the first membrane module, with a second outlet duct of the first membrane module corresponding to the outlet of the final product;
and wherein the second membrane module or the final module, in the event of there being successive membrane modules located in series, is **characterised in that** it comprises at least two outlet ducts, a first outlet duct corresponding to the outlet of the final product and a second outlet duct corresponding to the backwater stream, said second duct being connected to the first membrane module at the end opposite that of the feed of the brackish water or seawater or at the same feed end of the brackish water or seawater.

9. The system according to claim 8, wherein the number of reverse osmosis membranes located in each of the pressure pipes of the first membrane module is one or two.

10. The system according to claim 8 or 9, wherein the number of reverse osmosis membranes in each pressure pipe of the second membrane module is 5 to 6.

11. The system according to any one of claims 8 to 10, wherein at least one valve for discriminating the feed to the first reverse osmosis membrane (1A) located in the first frame (5') or to the first reverse osmosis membrane (1B) located in the second frame (6') is located in the feed duct to the first membrane module.

12. The system according to any one of claims 8 to 11, wherein the connection duct between the second membrane module or the final module, in the event of there being successive membrane modules, and the first membrane module comprises at least one energy recovery device (4').

13. The system according to any one of claims 8 to 12, **characterised in that** it comprises at least one cleaning solution storage tank (2'), wherein said storage tank (2') is connected with the first frame (5') and the second frame (6') through a connecting duct.

14. The system according to any one of claims 8 to 13, wherein in addition to the first frame (5') and second frame (6'), the first membrane module comprises at least one additional frame located in parallel with respect to said first frame (5') and second frame (6').
